# EUROPÄISCHE PATENTANMELDUNG

(11) **EP 1 024 611 A2**
(43) Veröffentlichungstag der Anmeldung: **02.08.2000**
(21) Anmeldenummer: 00101507.2
(22) Anmeldetag: 26.01.2000
(51) Int. Cl.: H04B 7/26

(54) **Verfahren und Funk-Kommunikationssytem mit Zuteilung von Teilnehmercodes zu Basisstationen und Teilnehmerstation**

(30) Priorität: 26.01.1999 DE 19903017
(71) Anmelder: SIEMENS AKTIENGESELLSCHAFT, 80333 München (DE)
(72) Erfinder: Schulz, Egon, Dr., 80993 M-nchen (DE); Wegner, Frank, 13407 Berlin (DE); Plogsties, Jens, 12524 Berlin (DE)

(57) **Zusammenfassung**

Erfindungsgemäß werden in CDMA-Funk-Kommunikationssystemen unterschiedliche Teilnehmercodes eines vorhandenen Teilnehmercodesets einer Codefamilie verschiedenen Basisstation, usw. zugeteilt. Bei einen Codewiederholungswert von im Extremfall eins, werden somit ohne eine Zuhilfenahme eines weiteren Teilnehmercodesets aus einer anderen Teilnehmercodefamilie oder einer zusätzlichen FDMA-Komponente die Interferenzen zwischen benachbarten Basisstationen verringert. Bei fester Zuteilung der Teilnehmercodes an z.B. zwei Basisstationen ergibt sich ein Codecluster von zwei. Bei dynamischer Zuteilung der Teilnehmercodes kann das Codecluster dem jeweiligen Bedarf angepaßt werden. Werden weitere Teile des Teilnehmercodesets an weitere Basisstationen zugeteilt, kann ein "reuse cluster" von drei, vier etc. eingestellt werden.

## Beschreibung

Die Erfindung betrifft ein Verfahren und ein Funk-Kommunikationssystem mit Zuteilung von Teilnehmercodes zu Basisstationen, insbesondere in einem zellularen Mobilfunksystem mit breitbandigen Kanälen und einer Signalübertragung durch CDMA-Teilnehmerseparierung.

In Funk-Kommunikationssystemen werden Informationen (Sprache, Bilder oder andere Daten) mit Hilfe elektromagnetischer Wellen über eine Funkschnittstelle zwischen Teilnehmerstationen, z.B. Mobilstationen oder anderen mobilen Endgeräten und Basisstationen übertragen. Dabei erfolgt das Abstrahlen durch elektromagnetischen Wellen, die in dem für das jeweilige System vorgesehenen Frequenzband liegen. Zum Beispiel sind die Frequenzen im Frequenzband von ca. 2000 MHz für zukünftige Mobilfunksysteme mit CDMA oder TD/CDMA-Übertragungsverfahren, z.B. UMTS (Universal Mobile Telecommunication System) vorgesehen.

Frequenzmultiplex (FDMA), Zeitlagenmultiplex (TDMA) oder ein als Codemultiplex (CDMA) bekanntes Verfahren dienen der Teilnehmerseparierung bei der Funkübertragung. Ein diese Verfahren kombinierendes Funk-Kommunikationssystem ist aus DE 195 49 148 A1 bekannt. Das GSM- (Global System for Mobile communications) Mobilfunksystem nutzt hingegen nur eine Kombination aus FDMA und TDMA. Beide o.g. Verfahren haben einen Frequenzwiederholungswert (frequency reuse cluster) von wesentlich größer als eins. Somit werden Störungen (Interferenzen) zwischen benachbarten Basisstationen verringert. Bei diesen Verfahren bezieht sich die Ressourcenzuteilung für die Basisstationen jeweils nur auf die FDMA-Komponente.

Der Erfindung liegt die Aufgabe zugrunde, ein Verfahren und ein Funk-Kommunikationssystem anzugeben, bei denen die Interferenzen verringert werden, auch wenn der Teilnehmercodewiederholungswert gegen eins geht. Diese Aufgabe wird durch das Verfahren mit den Merkmalen des Anspruchs 1 und das Funk-Kommunikationssystem mit den Merkmalen des Anspruchs 12 gelöst. Vorteilhafte Weiterbildungen der Erfindung sind den Unteransprüchen zu entnehmen.

Erfindungsgemäß werden unterschiedliche Teilnehmercodes eines vorhandenen Teilnehmercodesets einer Codefamilie den verschiedenen Basisstationen zur gleichzeitigen Benutzung zugeteilt. Bei einem Codewiederholungswert von im Extremfall eins werden somit ohne eine Zuhilfenahme eines weiteren Teilnehmercodesets aus einer anderen Teilnehmercodefamilie oder einer zusätzlichen FDMA-Komponente die Interferenzen zwischen benachbarten Basisstationen verringert. Die Zuteilung eines Teilnehmercodes zu einer Basisstation bedeutet gegebenfalls, daß der zur Verbindung gehörige Teilnehmerstation ebenfalls die Benutzung dieses Teilnehmercodes signalisiert wird.

Die Teilnehmercodes eines Teilnehmercodesets sind empfangsseitig gut voneinander unterscheidbar. Aufgrund der gegenseitigen Beziehungen (Kreuzkorrelationseigenschaften, Orthogonalität) dieser Teilnehmercodes eines Teilnehmercodesets sind sie in Korrelationsempfängern mit hoher Wahrscheinlichkeit auch bei gestörter Übertragung trennbar. Diese Unterscheidbarkeit wird häufig als Orthogonalität der Teilnehmercodes zueinander bezeichnet. Die Unterscheidbarkeit von Teilnehmercodes anderer Teilnehinercodesets oder gar Codefamilien ist geringer, sie werden empfangsseitig eher als Rauschen wahrgenommen. Teilnehmercodes dienen der Separierung der von einem oder für einen Teilnehmer gesendeten Verkehrsdaten und der Signalspreizung auf eine größere Bandbreite auf der Funkschnittstelle. Codes zum Fehlerschutz dienen hingegen der Verschlüsselung bzw. der Verwürfelung von Daten mit dem Ziel einer größeren Fehlerresistenz.

Bei fester Zuteilung der Teilnehmercodes an z.B. zwei Basisstationen ergibt sich ein Codecluster von zwei. Bei dynamischer Zuteilung der Teilnehmercodes kann das Codecluster dem jeweiligen Bedarf angepaßt werden. Werden weitere Teile des Teilnehmercodesets an weitere Basisstationen zugeteilt, kann ein "reuse cluster" von drei, vier etc. eingestellt werden.

Im Gegensatz zu bekannten Funk-Kommunikationssystemen und zur Lösung in DE 198 20 736 wird die Ressource "Teilnehmercode" variabel innerhalb des Systems aufgeteilt. Besonders in breitbandigen Funk-Kommunikationssystemen, bei denen nur wenige Frequenzbänder zur Verfügung stehen, z.B. im ungepaarten Band (unpaired band) der 3. Mobilfunkgeneration spielt eine definierte Ressourcenzuteilung eine große Rolle.

Ein Funk-Kommunikationssystem, z.B. ein Mobilfunksystem mit einer CDMA Teilnehmerseparierung und einem TDD-Übertragungsverfahren (Time Division Duplex) zwischen Mobilstationen und Basisstationen, bei dem die Ressource "Teilnehinercode" in einem Frequenzband für Aufwärts- und Abwärtsrichtung (uplink - downlink) benutzt wird und eine unzureichende Anzahl von Teilnehmercodefamilien vorhanden sind, ist ein vorteilhafter Anwendungsfall. Ein Teilnehmercodeset hat hier beispielsweise 16 Teilnehmercodes.

Ursprünglich kann nur innerhalb des von einer Basisstation abgedeckten Gebietes ein Teilnehmercodeset aus einer Codefamilie verwendet werden. Andere Teilnehmercodes aus anderen Codefamilien werden nur wie Rauschen erkannt. Entscheidend für die Wiederverwendung der Ressource "Teilnehmercode", innerhalb eines Mobilfunksystems, ist die Anzahl der Codefamilien. Erfindungsgemäß kann ein vorhandenes Teilnehmercodeset aus einer Codefamilie auf mehrere Basisstationen aufgeteilt werden. Dieses Verfahren ermöglicht einen höheren Wiederverwendungsgrad der Ressource "Teilnehmercode" und eine hohe lokale Funkverkehrslast.

Nach einer vorteilhaften Weiterbildung der Erfindung ist die Zuteilung von ersten und zweiten Teilen des Teilnehmer-codesets einer Codefamilie je nach Anforderung exklusiv. So kann die Basisstationen nur mit den ihnen zugewiesenen Teilnehmercodes senden bzw. empfangen. In diesem Fall wird eine schnellere und störungsfreiere Decodierung der übertragenen Signale gewährleistet und die Interferenzen zwischen benachbarten Basisstationen können durch gezielte Wahl und Aufteilung der Teilnehmercodes entscheidend verringert werden.

Die bestmögliche Ausnutzung der funktechnischen Ressourcen ermöglicht ein hybrides Zuteilungsverfahren. Dabei kann ein erster Teil der Ressource "Teilnehmercode" aus einem Teilnehmercodeset fest zugewiesen werden und ein zweiter Teil kann dynamisch zugeteilt werden. Beide verwendeten Teile des Teilnehmercodeset stammen idealerweiser aus einer Codefamilie oder werden aus anderen Codefamilien nach dem Kriterium der Trennbarkeit entsprechend ausgewählt. Hierbei können die Vorteile des festen und des dynamischen Zuteilungskonzeptes vereint werden. Durch die feste Zuweisung der Teilnehmercodes wird der Signalisierungsaufwand gering gehalten und durch die dynamische Zuweisung der Teilnehmercodes kann für die jeweiligen Zellen bedarfsorientiert (z.B. hohe Datenraten) reagiert werden.

Desweiteren können die dynamisch verteilten Ressourcen mehreren Basisstationen lastbezogen zugeteilt werden. Dadurch können auch einem einzelnen Teilnehmer mit hoher Datenratenanforderung, z.B. 384 kbps, mehrere Teilnehmercodes zur Verfügung gestellt werden, da die Teiinehinercodes nicht in dem ganzen Funksystems räumlich zersplittert vorliegen. Bei einem Übergang eines Teilnehmers von einer Zelle in eine andere Zelle ist es möglich, daß der Teilnehmer seinen ihm zugewiesenen Teilnehmercode mitnehmen kann.

Die Zuteilung und die Umverteilung der Ressource "Teilnehmercode" erfolgt entweder durch eine übergeordnete Organisationseinheit (z.B. radio network management). Hierdurch läßt sich das System sehr übersichtlich gestalten. Eine Verringerung der Signalisierungwege läßt sich durch eine Organisation zwischen den Basisstationen gestalten. Eine Organisation mit Hilfe der Teilnehmerstationen ermöglicht hierbei die Organisation auf der Funkschnittstelle. Letzteres ist insbesondere für Systeme mit Teilnehmerstationen, welche Basisstationeigenschaften (relaying) beinhalten interessant. Desweiteren besteht die Möglichkeit, daß einzelne Teilnehmercodes aus einer Codefamilie von mehreren Basisstationen in der näheren Umgebung genutzt werden, sofern eine direkte Beeinflußung durch ausreichenden räumlichen Abstand ausgeschlossen wird.

Die Zuteilung der Teilnehmercodes erfolgt nicht vorteilhafterweise paritätisch, sondern der erste Teil des Teilnehmercodesets aus einer Codefamilie erhält bei der Zuteilung des Teilnehmercodes zu einer Teilnehmerstation eine höhere Priorität als der zweite Teil. Damit stehen im Bedarfsfalle dynamisch zuteilbare Ressourcen zur Verfügung. Sollen für eine Funkverbindung ein oder mehrere ädaquate Teilnehmercode(s) zur Verfügung stehen, wird von der übergeordneten Organisationseinheit ermittelt, welche Teilnehmercodes von der Basisstation und/oder auch benachbarter Basisstationen gerade genutzt werden, damit ein oder mehrere geeignete Teilnehmercodes für eine Verbindung ausgewählt werden können.

Um die Ressourcenausnutzung zu verbessern, werden je nach Verkehrslast der einen Basisstation mit dem höchsten Verkehrsaufkommen mehr Teilnehmercodes zur Verfügung gestellt als den anderen Basisstation mit weniger Verkehrsaufkommen.

Im folgenden wird die Erfindung anhand eines Ausführungsbeispiels bezugnehmend auf zeichnerische Darstellungen näher erläutert.

Dabei zeigen
- FIG 1:: Ein Blockschaltbild eines Mobilfunksystems,
- FIG 2:: Eine schematische Darstellung einer Zelle mit Vorbereitung zum Wechsel in einen andere Zelle,
- FIG 3:: Eine schematische Darstellung einer Zelle nach einem Zellwechsel,
- FIG 4:: Neuvergabe der Ressourcen innerhalb einer Zelle bei günstigen Verkehrslastbedingungen,
- FIG 5:: Eine schematische Darstellung des Zellwechsels bei der Rahmenstruktur eines TDD-Übertragungsverfahren unter Beibehaltung von Teilnehmercode und Zeitschlitz,
- FIG 6:: Gleichzeitige Funkverbindungen von Basisstationen BS2 und BS3 mit der Teilnehmerstation MS7 bei Beibehaltung von Teilnehmercode und Trainingssequenz, und
- FIG 7:: Verringerung der Komplexität und des Energiebedarfs in Basisstationen.

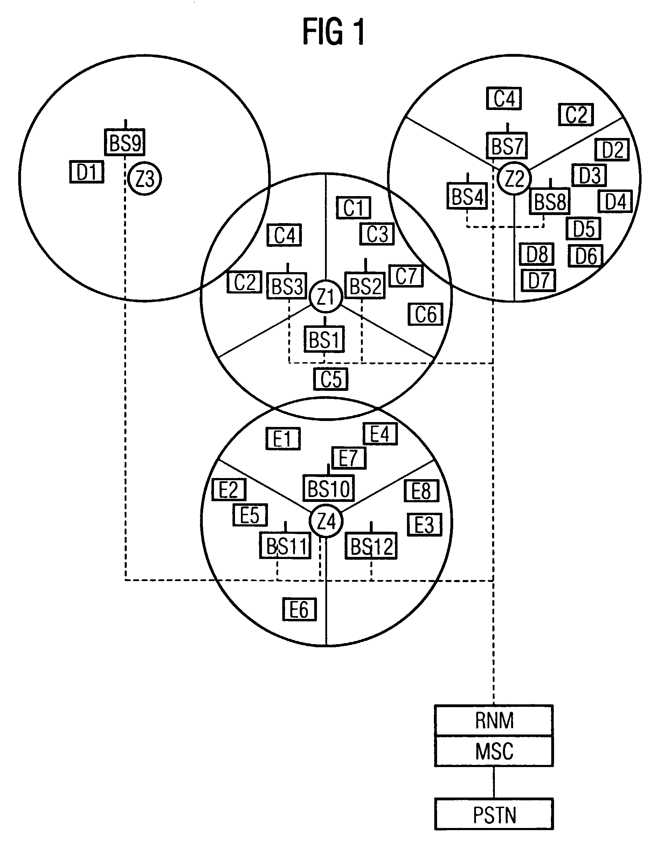

Das in FIG 1 dargestellte Mobilfunksystem als Beispiel eines Funk-Kommunikationssystems, besteht aus Mobilvermittlungsstellen MSC - nur eine ist dargestellt, die untereinander vernetzt sind bzw. den Zugang zum Festnetz PSTN ermöglichen. Weiterhin sind diese Mobilvermittlungsstellen MSC mit jeweils einer übergeordneten Organisationseinheit RNM zum Zuteilen von funktechnischen Ressourcen verbunden. Jede dieser Organisationseinheiten RNM ermöglicht eine Verbindung zu mindestens einer Basisstation BS. Eine solche Basisstation kann über eine Funkschnittstelle eine Verbindung zu weiteren Teilnehmerstationen, z.B. Mobilstationen MS oder andersweitigen mobilen und stationären Endgeräten aufbauen. Durch jede Basisstation BS wird eine Funkzelle Z1..Z4 gebildet. Im Sinne der Erfindung enthält bei einer Sektorisierung eine installierte Basisstation BS mehrere virtuelle Basisstationen BS.

Die Organisationseinheit RNM zum Zuteilen der funktechnischen Ressourcen und mehrere Basisstationen BS bilden ein Basisstationssystem. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß. Auch spezielle Basisstationen BS, die als Heimbasisstationen im privaten Bereich eingesetzt werden und an ein Festnetz PSTN angeschlossen sind, sind ohne von der Funknetzplanung betroffen zu sein, in der Lage, Verbindungen zu Mobilstationen MS aufzubauen.

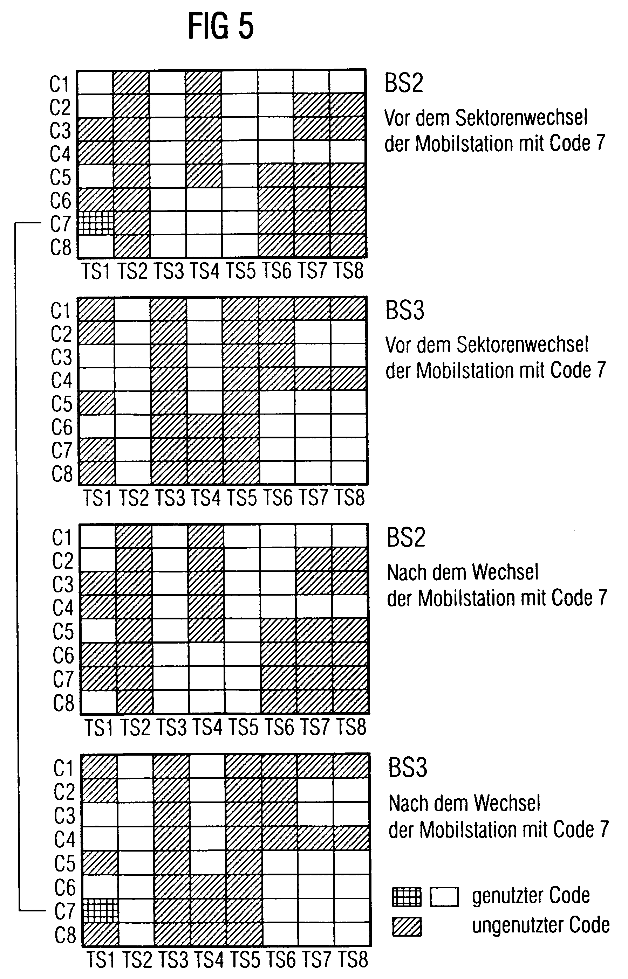

Beispielsweise ist in einem Funk-Kommunikationssystem mit TDMA-Komponente eine Aufteilung eines breitbandigen Frequenzbereiches, z.B. 5 MHz, in mehrere Zeitschlitze TS gleicher Dauer vorgesehen, siehe FIG 5 oder DE 198 20 736. Innerhalb eines Zeitschlitzes TS, vorgesehen für normale Nutzdaten, werden Informationen mehrerer Funkverbindungen in Blöcken übertragen. Diese Funkblöcke beinhalten Daten, in denen Trainingssequenzen eingebracht wurden. Diese Trainingssequenzen sind empfängerseitig bekannt und dienen der Kanalschätzung. Die Daten werden mit einem bestimmten Teilnehmercode gespreizt. Empfangsseitig können so durch diese CDMA-Komponente eine bestimmte Anzahl von Teilnehmern separiert werden. Die Spreizung von einzelnen Symbolen der Daten erreicht, daß innerhalb einer Symboldauer Q Chips übertragen werden.

In FIG 1 sind beispielhaft verschiedene Teilnehmercodes aus verschiedenen Codefamilien C, D, E usw. dargestellt, die von der jeweiligen Basisstation dem mobilen Teilnehmer zugeteilt wurden. Anhand von diesem Beispiel wird ersichtlich, daß Teilnehmercodes aus einer Codefamilie C innerhalb einer sektorisierten Zelle Z1 verwendet werden. Angrenzende Zellen sollen, um Interferenzen zu vermeiden, mit einem Teilnehmercodeset aus einer anderen Codefamilie arbeiten. Ist die benachbarte Zelle Z2 ebenfalls sektorisiert, können in dem von der Zelle Z1 entfernteren Sektor der Zelle Z2 Teile des Teilnehmercodesets C wiederverwendet werden.

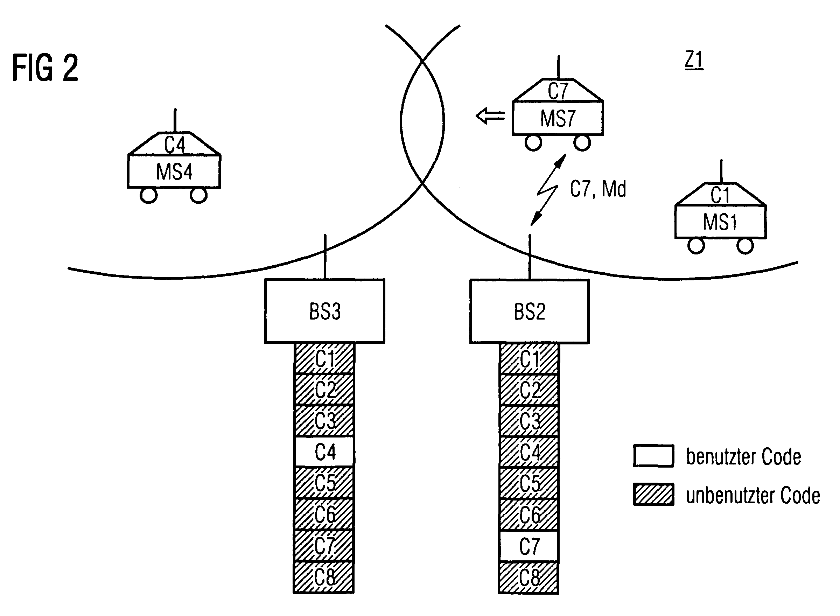

Zwei aneinandergrenzende Zellen mit den Basisstationen BS2, BS3 sind in FIG 2 dargestellt. Die Teilnehmercodes (z.B. 8 orthogonale Teilnehmercodes) aus der Codefamilie C werden verwendet. So können z.B. die Teilnehmercodes C1, C3 der Basisstation BS2 und die Teilnehmercodes C2, C4 der Basisstation BS3 fest zugeordnet sein. Die Codes C5, C6, C7 und C8 können z.B. dynamisch den Basisstationen BS2 und BS3 zugewiesen werden. Dies erfolgt lastabhängig und kann z.B. von einem Operations- und Wartungszentrum bzw. von der übergeordneten Organisatioseinheit RNM gesteuert werden.

Wie in der in FIG 2 dargestellten Zelle Z1, ist der Teilnehmerstation MS7 der Teilnehmercode C7 zugewiesen worden. Der Teilnehmer befindet sich kurz vor dem Übergang in die nächste Zelle. Sein Teilnehmercode C7 gehört zum Teilnehmercodeset C einer Codefamilie. In beiden Zellen stehen unterschiedliche Teilnehmercodes des Teilnehmercodeset C zur Verfügung. Desweiteren wurde der Teilnehmerstation MS7 eine Trainingssequenz Md zugeteilt.

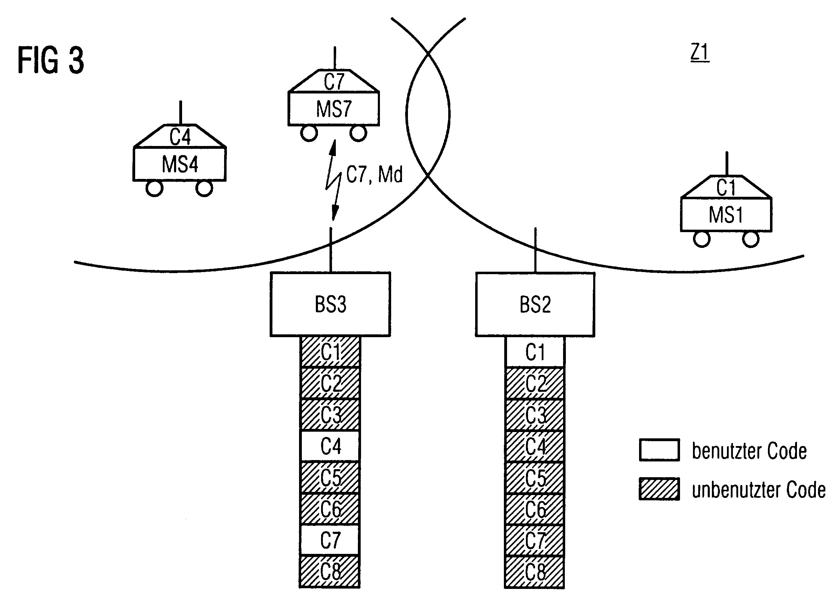

Nach dem Zellwechsel, wie in FIG 3 dargestellt, hat die Teilnehmerstation MS7 ihren Teilnehmercode C7 und ihre Trainingssequenz Md beibehalten. Die Basisstation BS2 hat der Basisstation BS3 z.B. über eine direkte Signalisierungsverbindung oder über die Organisationseinheit RNM oder über eine Teilnehmerstation MS mitgeteilt, daß eine Teilnehmercodemitnahme erfolgt. Somit bedarf es keiner neuen Zuweisung einer neuen Ressource "Teilnehmercode".

Als Vorteil der Nutzung der gleichen Codefamilie bzw. speziell ausgewählte andere Codefamilien/Codes, veringert sich die Interferenz zwischen benachbarten Zellen/Sektoren und auch die Interferenz zwischen örtlich benachbarten Teilnehmerstationen MS am Zellrand.

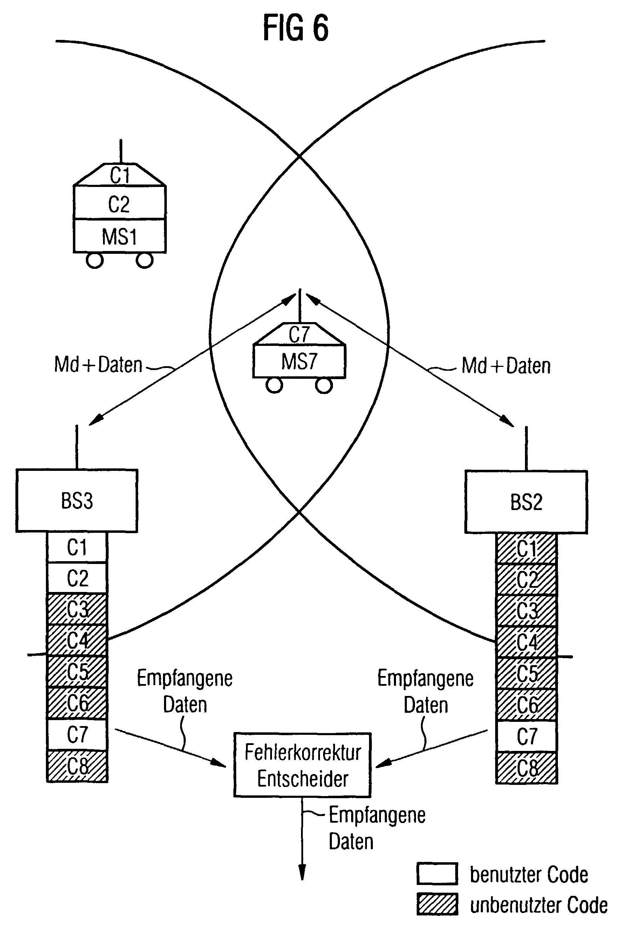

Befindet sich die Teilnehmerstation MS7 im Moment des Zellwechseis, FIG 6, kann der Teilnehmerstation MS7 den ihr zugeteilten Teilnehmercode C7 und die Trainingssequenz Md beibehalten. Beide Basisstationen BS2 und BS3 empfangen den von der Teilnehmersstation MS7 gesendeten Datensatz.

Durch ein Auswahlverfahren, mit dem der Datensatz mit dem geringsten Fehleraufkommen (Bitfehlerrate, -wahrscheinlichkeit, -verlauf oder -position) ausgewählt wird, kann eine verbesserte Fehlerkorrektur vorgenommen werden. Es sind jedoch auch andere auf die Übertragungs- oder Empfangsqualität bezogene Auswahlverfahren einsetzbar. Alternativ zu einer Auswahl können die Datensätze auch mit einem Kombinationsverfahren (z.B. MRC maximum ratio combining) kombiniert werden.

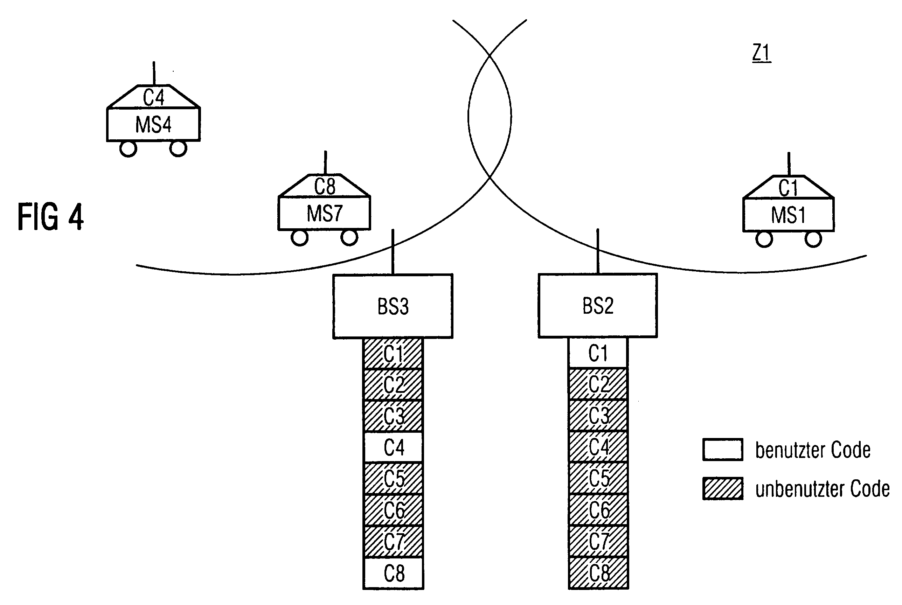

Bei sicherer Funkverbindung zu der Basisstation BS kann, wie in FIG 4 dargestellt, eine neue lastabhängige Vergabe der Teilnehmercodes durch die Organisationseinheit RNM vorgenommen werden. Dadurch erhält man ein optimales Lastzustandsverhalten.

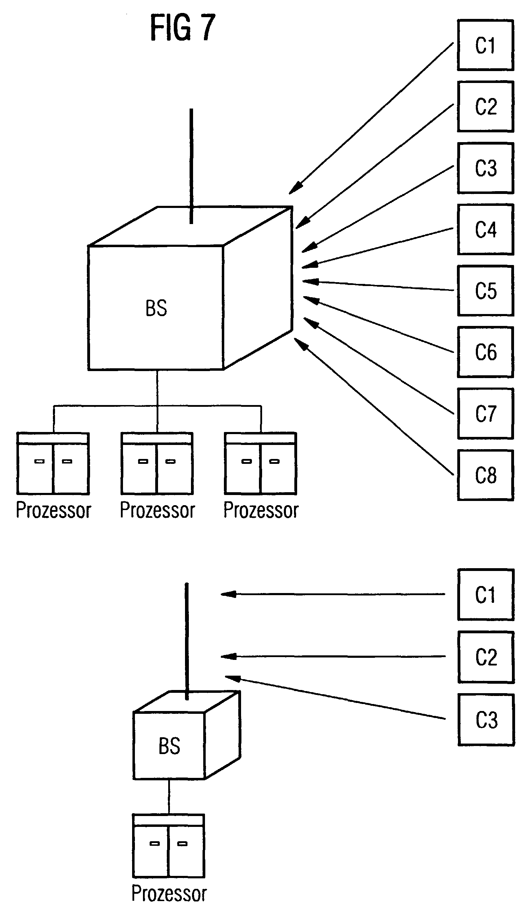

Da erfindungsgemäß die Teilnehmercodes mit einer bestimmten Anzahl, z.B. acht, einer Codefamilie auf mehrere Zellen mit je einer Basisstation BS aufgeteilt werden, kann der Rechenund Operationsaufwand in den jeweiligen Empfänger/Sendeeinheiten gesenkt werden, FIG 7. Somit verringert sich auch der Energiebedarf.

Über eine Signalisierung wird jeder Teilnehmerstation MS die aktuelle Information über die vorhandene Anzahl und/oder Benutzung der Teilnehmercodes mitgeteilt. Es besteht die Möglichkeit, diese Signalisierung über bereits vorhandene Organisationskanäle durchzuführen. In einer Rahmenstruktur eines TDD-Übertragungsverfahrens beispielsweise dient der Zeitschlitz TS0 der Signalisierung in einem solchen Organisationskanal BCCH, welcher von mehreren Basisstationen z.B. BS2, BS3 genutzt werden kann. Kennt die Teilnehmerstation MS die z.B. in Abwärtsrichtung in der Zelle benutzten Teilnehmercodes, so kann sie sich bei der Detektion darauf einstellen. Somit sinkt die Komplexität der Detektion und u.U. kann ein Signalprozessor abgeschaltet werden. Damit sinkt wiederum der Energiebedarf.

In FIG 5 ist eine mögliche Rahmenstruktur mit je acht Zeitschlitzen TS1..TS8 eines TDD-Übertragungsverfahren abgebildet. In jedem Zeitschlitz TS werden mit je einem Teilnehmercode C1..C8 gespreizte Verkehrsdaten verschiedener Verbindungen übertragen. Bei einem Zellwechsel einer Teilnehmerstation MS, während einer Verbindung, von Basisstation BS2 zu Basisstation BS3, kann der Teilnehmercode C7 in der Zelle mit der Basisstation BS3 weiterverwendet werden. Desweiteren besteht die Möglichkeit, den gleichen Zeitschlitz TS wiederzuverwenden.

Mit hybriden Ressourcenzuteilung kann ein virtuelles Codecluster aufgebaut werden, ohne daß die Nachteile der starren Zuweisung der Ressourcen, wie geringe Verkehrslast und schlechte Absicherung hoher Datenraten, auftreten. Die Zuweisung der Teilnehmercodes ist sehr flexibel, führt zu einem Absinken des Rechenaufwandes in der Emfänger/Sendebaugruppe und somit zu einem geringeren Energieaufwand bei der Signalverarbeitung und kann eine Zellplanung mit kleinstmöglichen Teilnehmercodewiederholungswert unterstützen.

Das Teilnehmercodezuteilungsverfahren schafft eine effiziente und an die Zellenumgebung angepaßte Lösung in einem breitbandigen Mobilfunksystem, B > 1,2 MHz - z.B. 5 MHz, durch eine, wegen der optimalen Umverteilung der Teilnehmercodes, geringere Signallast, eine geringere Wahrscheinlichkeit eines Verbindungsabbruchs, besonders bei Zellwechsel eines Teilnehmers und eine schnelle Reaktion auf eine hohe Verkehrslast durch eine Vielzahl von Teilnehmern oder Datendiensten.

## Patentansprüche

1. Verfahren zur Teilnehmercodezuteilung in einem Funk-Kommunikationssystem mit Teilnehmerstationen (MS1, MS2,..) und Basisstationen (BS1, BS2, ..), die über eine Funkschnittstelle mit CDMA-Übertragungsverfahren verbunden sind,
**dadurch gekennzeichnet,**
daß unterschiedliche Teilnehmercodes (C1..C8) eines Teilnehmercodesets (C) verschiedenen Basisstationen (BS1, BS2,..) zugeteilt werden.

2. Verfahren nach Anspruch 1, **dadurch gekennzeichnet,** daß die Zuteilung der Teilnehmercodes des Teilnehmercodesets (C) exklusiv ist und die Basisstationen (BS1, BS2,..) mit den ihnen zugeteilten Teilnehmercodes senden und/oder empfangen.

3. Verfahren nach Anspruch 1 oder 2, **dadurch gekennzeichnet,** daß ein erster Teil des Teilnehmercodesets (C) fest einer Basisstation (BS1, BS2) zugeteilt wird und ein zweiter Teil des Teilnehmercodesets (C) dynamisch zugeteilt wird.

4. Verfahren nach Anspruch 3, **dadurch gekennzeichnet,** daß der zweite Teil des Teilnehmercodesets (C) mehreren Basisstationen (BS) lastbezogen zuweisbar ist.

5. Verfahren nach einem der Ansprüche 3 oder 4, **dadurch gekennzeichnet,** daß die Zuteilung des zweiten Teils des Teilnehmercodesets (C) dezentral durch die Basisstation (BS) erfolgt.

6. Verfahren nach einem der Ansprüche 3 bis 5, **dadurch gekennzeichnet,** daß der Teilnehmerstation (MS) ein Teilnehmercode aus dem ersten Teil des Teilnehmercodesets (C) mit höherer Priorität als ein Teilnehmercode aus dem zweiten Teil des Teilnehmercodesets (C) zugeteilt wird.

7. Verfahren nach einem der vorherigen Ansprüche, **dadurch gekennzeichnet,** daß die Teilnehnerstation (MS) bei einem Zellwechsel den gleichen Teilnehmercode (C7) beibehält.

8. Verfahren nach einem der vorherigen Ansprüche, **dadurch gekennzeichnet,** daß die Teilnehmerstation (MS) eine zugeteilte Trainingssequenz (Md) bei Zellwechsel beibehält.

9. Verfahren nach einem der vorherigen Ansprüche, **dadurch gekennzeichnet,** daß die Teilnehmerstation (MS) einen zugeteilten Zeitschlitz (TS) bei Zellwechsel beibehält.

10. Verfahren nach einem der vorherigen Ansprüche, **dadurch gekennzeichnet,** daß benachbarte Basisstationen (BS1, BS2) die gleiche Codefamilie benutzen.

11. Verfahren nach einem der vorherigen Ansprüche, **dadurch gekennzeichnet,** daß bei gleichzeitiger Verbindung von zwei Basisstationen (BS1, BS2) mit der Teilnehmerstation (MS) Empfangssignale beider Verbindungen netzseitig ausgewertet werden und der Datensatz mit dem geringsten Fehleraufkommen an übergeordnete Verarbeitungseinheiten weitergeleitet wird.

12. Funk-Kommunikationssystem mit mehreren Basisstationen (BS1, BS2,..) und mehreren Teilnehmerstationen (MS1, MS2,..), die über eine Funkschnittstelle miteinander verbunden sind, wobei für die Funkschnittstelle ein CDMA-Übertragungsverfahren benutzt wird,
**gekennzeichnet durch,**
eine Einrichtung (RNM), die unterschiedliche Teilnehmercodes (C1..C8) eines Teilnehmercodesets (C) verschiedenen Basisstationen (BS1, BS2,..) zuteilt.

13. Funk-Kommunikationssystem nach Anspruch 12, **dadurch gekennzeichnet,** daß zur Teilnehmerseparierung zusätzlich ein Zeitmultiplex-Verfahren benutzt wird, daß in einem Frequenzband sowohl eine Übertragung in Aufwärts- als auch in Abwärtsrichtung getrennt durch einen Umschaltpunkt vorsieht.

14. Funk-Kommunikationssystem nach einem der Ansprüche 12 oder 13, **gekennzeichnet durch,** eine Organisationseinheit (RNM), die die Aufteilung der Teilnehmercodes (C1..C8) auf die Basisstationen (BS) zeitveränderlich vornimmt, wobei dabei die Interferenzen zwischen den beteiligten Stationen (BS, MS) einer oder mehrerer Zellen (Z1..Z3) und/oder die Übertragungsqualität berücksichtigt werden.

15. Funk-Kommunikationssystem nach einem der Ansprüche 12 bis 14, **gekennzeichnet durch,** je eine Detektionseinrichtung (Prozessor) in den Stationen (BS, MS), die nur eine Teilmenge der Teilnehmercodes (C1, C2, C3) eines Teilnehmercodesets (C) bei der Detektion berücksichtigt.
